Europäisches Patentamt

European Patent Office

Office européen des brevets

(19)

(11) Numéro de publication: **0 185 580**
**B1**

(12) **FASCICULE DE BREVET EUROPEEN**

(45) Date de publication du fascicule du brevet:
18.01.89

(21) Numéro de dépôt: 85402333.0

(22) Date de dépôt: 27.11.85

(51) Int. Cl.⁴: **B 60 J 5/04**, B 60 J 1/17

(54) **Porte latérale de véhicule automobile.**

(30) Priorité: 30.11.84 FR 8418338

(43) Date de publication de la demande:
25.06.86 Bulletin 86/26

(45) Mention de la délivrance du brevet:
18.01.89 Bulletin 89/3

(84) Etats contractants désignés:
**DE GB IT**

(56) Documents cités:
**WO-A-82/03105**
**DE-A- 2 127 724**
**DE-A- 2 952 177**
**DE-A- 3 126 065**
**FR-A- 1 519 388**
**FR-A- 2 161 044**
**FR-A- 2 502 230**
**GB-A- 2 089 738**
**US-A- 4 034 509**

(73) Titulaire: **AUTOMOBILES PEUGEOT, 75, avenue de la Grande Armée, F-75116 Paris (FR)**
Titulaire: **AUTOMOBILES CITROEN, 62 Boulevard Victor-Hugo, F-92200 Neuilly-sur-Seine (FR)**

(72) Inventeur: **Miclot, André Louis, 12, Place des Myrtilles, F-78310 Maurepas-Village (FR)**

(74) Mandataire: **Durand, Yves Armand Louis et al, Cabinet Z. Weinstein 20, Avenue de Friedland, F-75008 Paris (FR)**

ACTORUM AG

## Description

La présente invention concerne une porte latérale de véhicule automobile.

Elle vise également un véhicule automobile dont toutes les portes sont du type de la porte conforme à l'invention.

Beaucoup de véhicules automobiles sont équipés de portes latérales munies d'une vitre coulissante et montées de manière pivotante et étanche dans un encadrement solidaire de la caisse du véhicule.

La porte, objet de la présente invention, est du genre ci-dessus, mais elle possède une structure très spéciale conférant à ladite porte de nombreux avantages par rapport aux portes connues, notamment sur le plan de l'assemblage des éléments qui la composent, et de l'accès aux mécanismes de commande de la vitre et de verrouillage de la porte.

On connaît déjà, d'après le document WO-A-82/03105, une porte de véhicule comprenant un cadre sur lequel est fixé un panneau transparent délimitant une ouverture obturable par une vitre coulissante, et dans laquelle une traverse est fixée par ses extrémités aux branches latérales du cadre, cette traverse étant intérieure à la vitre coulissante dont la partie inférieure peut pénétrer dans un logement fermé constitué par des panneaux opaques formant la partie basse de la porte.

Mais une telle porte, non seulement exige du temps et peut procurer des difficultés au niveau de l'assemblage ou du démontage des divers éléments qui la composent, mais aussi ne comporte aucun renfort particulier sur ses tranches latérales avant et arrière et qui serait notamment de nature à rigidifier latéralement la porte tout en permettant l'assemblage ou le démontage rapide de cette porte.

C'est pourquoi la présente invention propose une porte de véhicule perfectionnée qui répond aux objectifs ci-dessus.

A cet effet, l'invention a pour objet une porte latérale de véhicule automobile comprenant un cadre sur lequel est fixé un panneau transparent délimitant une ouverture obturable par une vitre coulissante, et dans laquelle une traverse est fixée par ses extrémités aux branches latérales du cadre, cette traverse étant intérieure à la vitre coulissante dont la partie inférieure peut pénétrer dans un logement fermé constitué par des panneaux opaques formant la partie basse de la porte, caractérisée en ce que les panneaux opaques sont d'une part fixés latéralement par clippage sur des profilés fixés sur le cadre et recouvrant respectivement les tranches arrière et avant de la porte jusqu'à environ la moitié de la hauteur de celle-ci, et sont d'autre part solidaires par leur partie supérieure du panneau transparent entourant la vitre.

Suivant une autre caractéristique de cette porte, le cadre, les deux profilés et le panneau opaque extérieur coopèrent avec un joint disposé intérieurement à l'encadrement de la porte pour assurer son étanchéité en même temps que la continuité du panneau transparent avec la carrosserie du véhicule.

Selon encore une autre caractéristique de cette porte, l'étanchéité vis-à-vis de la partie basse de la carrosserie est assurée par un retour du panneau extérieur qui écrase le joint.

Mais d'autres caractéristiques et avantages de l'invention apparaîtront mieux dans la description détaillée qui suit et se réfère aux dessins annexés, donnés uniquement à titre d'exemple, et dans lesquels:

La figure 1 est une vue en élévation et très schématique d'une porte conforme aux principes de l'invention, et dont certains éléments ont été supprimés pour plus de clarté.

La figure 2 est une vue de la tranche de la partie avant de la porte, suivant la flèche II de la figure 1.

La figure 3 est une vue en coupe suivant la ligne III-III de la figure 1 et montrant la vitre coulissante en position relevée ou fermée.

La figure 4 est une vue de la tranche de la partie arrière de la porte, suivant la flèche IV de la figure 1.

Les figures 5 et 6 sont des vues en coupe suivant respectivement les lignes V-V et VI-VI de la figure 1 et les figures 7 et 8 sont des vues en coupe faites respectivement suivant les lignes VII-VII et VIII-VIII de la figure 1.

Les figures 9 à 12 sont encore des vues en coupe faites respectivement suivant les lignes IX-IX, X-X, XI-XI et XII-XII de la figure 1, et

Les figures 13 et 14 sont des vues en coupe de la partie basse de la porte, suivant respectivement les lignes XIII-XIII et XIV-XIV de la figure 1.

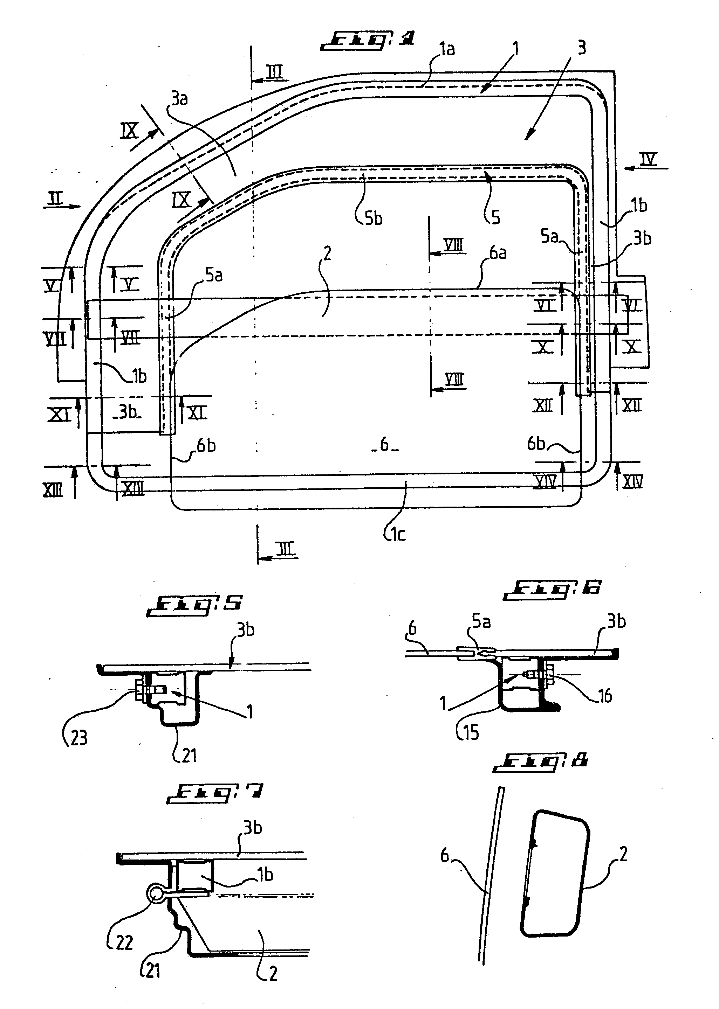

Suivant un exemple de réalisation, et en se reportant plus particulièrement à la figure 1, une porte conforme aux principes de l'invention comprend un cadre tubulaire 1 de section transversale rectangulaire et parcourant en périphérie les parties supérieure et latérale de la porte, ainsi que la partie basse ou inférieure de cette porte ou une portion de cette partie basse. On voit en effet que le cadre tubulaire 1 se compose d'une branche supérieure 1a, de deux branches latérales 1b et d'une branche inférieure 1c qui peut éventuellement présenter une partie interrompue.

Le cadre 1 est rigidifié par une traverse horizontale 2 présentant également une forme rectangulaire en section transversale, et située sensiblement à mi-hauteur de la porte. Les extrémités de la traverse 2 sont solidaires des branches latérales 1b du cadre 1.

Un panneau 3 de préférence transparent est fixé au cadre 1 par collage par exemple, ce panneau ayant été préalablement strié localement pour améliorer l'adhérence du panneau au cadre. Comme on le voit bien sur la figure 1, ce panneau recouvre périphériquement la porte et présente sensiblement la forme d'un U renversé dont la base 3a s'étend le long de la partie supérieure de la porte, et dont les branches 3b s'étendent le long des parties latérales de la porte.

Le panneau transparent 3 est muni sur son bord libre ou interne, d'un moyen 5 de guidage pour une vitre coulissante 6 qui est représentée en position ouverte sur la figure 1 et dont on voit en 6a le bord supérieur. La vitre 6, en position ouverte, découvre la partie comprise entre la traverse 2 et le guide 5 dont les branches latérales 5a et la branche supérieure 5b permettent respectivement le coulissement des bords latéraux 6b et du bord supérieur 6a de la vitre 6 qui est extérieure à la traverse 2.

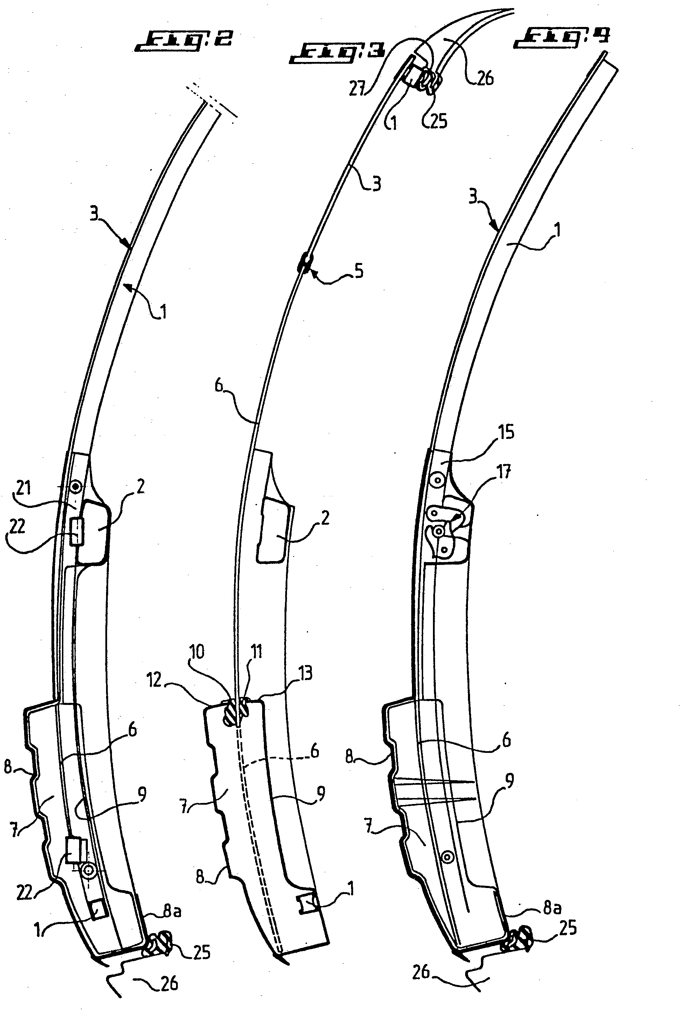

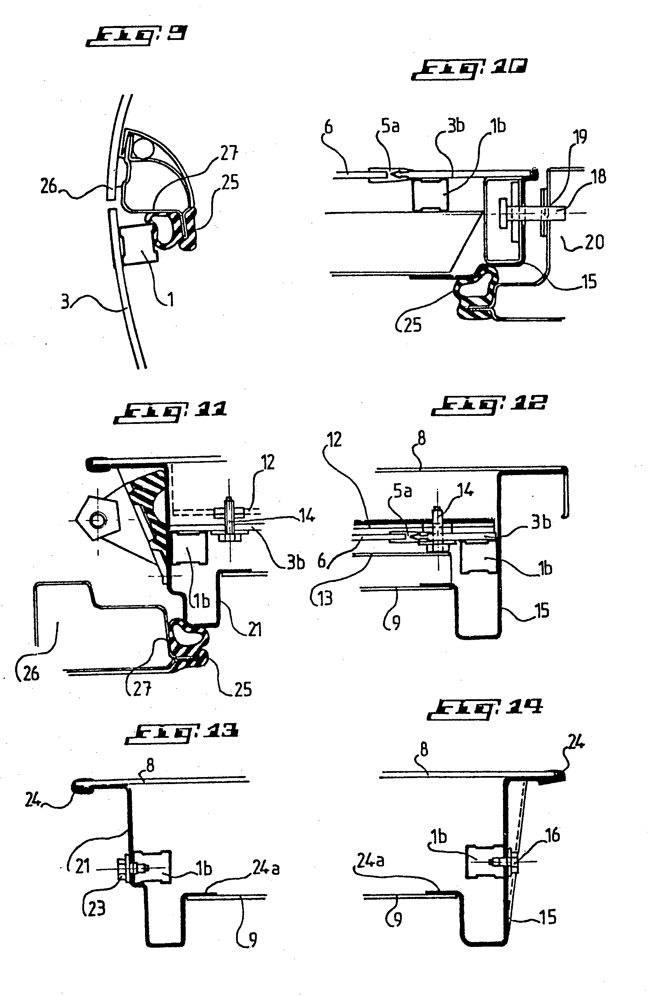

Comme on le voit notamment sur les figures 2, 3 et 4, la vitre 6 peut pénétrer par sa partie inférieure dans un logement 7 fermé et étanche constitué par deux parois ou panneaux opaques 8, 9 formant la partie basse de la porte. Plus précisément, le panneau 8, en matière plastique, est extérieur et fait fonction de pare-chocs latéral, tandis que le panneau 9 constitue un panneau intérieur de garnissage. La vitre 6 peut s'engager entre les panneaux 8 et 9 en passant entre deux joints d'étanchéité 10 et 11 visibles sur la figure 3, le joint 10 étant porté par un repli 12 à la partie supérieure du panneau 8, et le joint 11 étant porté par un repli 13 à la partie supérieure du panneau de garnissage 9. Les panneaux 8 et 9 définissant le logement 7 s'étendant sur une hauteur correspondant sensiblement au quart de la hauteur de la porte, comme on le voit sur les figures 2 à 4, lesdits panneaux 8 et 9 n'ayant pas été représentés sur la figure 1 pour plus de clarté.

Ainsi, les extrémités des replis 12 et 13 prennent appui sur les deux faces de la vitre 6, le repli 12 étant fixé par des vis 14 aux branches ou parties latérales 3b du panneau transparent 3, comme on le voit bien sur les figures 11 et 12.

Comme on le voit notamment sur la figure 4, un profilé formant battant 15 recouvre la tranche arrière de la porte jusqu'à environ la moitié de la hauteur de celle-ci. Ce profilé ou battant 15 est fixé au cadre 1 par des vis 16 que l'on voit sur la figure 6, et il est muni d'une serrure 17 dont le pêne 18 peut pénétrer dans une gâche 19 ménagées dans le pied milieu et latéral 20 de la caisse du véhicule, comme on le voit sur la figure 10.

En se reportant à la figure 2, on voit qu'un autre profilé formant battant 21 recouvre également la tranche avant de la porte jusqu'à environ la moitié de sa heuteur. Ce profilé ou battant 21 porte les charnières 22 de la porte et est fixé au cadre 1 par des vis 23, que l'on voit bient sur la figure 5.

Comme cela apparaît clairement sur les figures 13 et 14, le panneau extérieur 8 est fixé latéralement aux battants 15 et 21 par clippage 24, tandis que le panneau de garnissage 9 est fixé aux battants 15 et 21 également par clippage, comme on le voit en 24a. Dès lors, on comprend que les panneaux 8 et 9 sont d'une part solidaires latéralement du cadre 1 par l'intermédiaire des battants 15 et 21, et sont d'autre part solidaires à leur partie supérieure des branches 3b du panneau transparent 3 entourant la vitre, grâce aux vis 14.

L'étanchéité périphérique de la porte fermée est assurée par au moins un joint 25 fixé à la carrosserie 26 à l'intérieur d'un encadrement 27, comme on le voit sur les figures 3, 9 et 11. Le cadre tubulaire 1 prend appui sur le joint 25 dont l'écrasement permet au panneau transparent 3 de venir dans le prolongement et en continuité avec la carrosserie 26, comme on le voit bien sur les figures 3 et 9. Les battants 15 et 21 présentent en section transversale une forme apte à assurer l'écrasement du joint 25 de manière à assurer l'étanchéité latérale respectivement vis-à-vis du pied milieu 20 et de la carrosserie 26, comme on le voit sur les figures 10 et 11. Enfin l'étanchéité vis-à-vis de la partie basse ou longeron inférieur de la carrosserie 26 est assurée par un retour 8a du panneau extérieur 8 qui écrase le joint 25, comme on le voit bien sur les figures 2 et 4.

On comprend donc de ce qui précède que l'étanchéité supérieure, latérale et inférieure de la porte est assurée par la coopération du joint 24 respectivement avec le cadre tubulaire 1, les battants 15 et 21, et le panneau extérieur 8.

Le logement 7 défini par les panneaux 8 et 9 et les battants avant et arrière 15 et 21 contient un mécanisme (non représenté) de descente et de remontée de la vitre 6, ainsi que le mécanisme (également non représenté) permettant le verrouillage et le déverrouillage de la porte.

On a donc réalisé suivant l'invention une porte qui présente de nombreux avantages par rapport aux conceptions usuelles en ce que notamment elle permet un accès facile aux divers mécanismes précités par déclippage du panneau de garnissage 9, En outre, cette porte assure une protection parfaite contre la corrosion de la partie vulnérable de la carrosserie située en dessous du panneau extérieur 8 formant un pare-chocs décoratif.

Enfin, du fait de sa structure modulaire, toutes les portes d'une même voiture pourront se composer d'éléments communs et à savoir des battants avant et arrière identiques, des traverses identiques à la longueur près, des pare-chocs et panneaux de garnissage identiques à la longueur près, ainsi que des panneaux transparents ou entourages de vitre constitués de parties avant identiques et de partie arrière démontables et différenciées selon les portes.

Bien entendu, l'invention n'est nullement limitée au mode de réalisation décrit et illustré qui n'a été donné qu'à titre d'exemple.

## Revendications

1. Porte latérale de véhicule automobile comprenant un cadre (1) sur lequel est fixé un panneau transparent (3) délimitant une ouverture obturable par une vitre coulissante (6), et dans laquelle une traverse (2) est fixée par ses extrémités aux branches latérales (1b) du cadre, cette traverse étant intérieure à la vitre coulissante (6) dont la partie inférieure peut pénétrer dans un logement fermé (7) constitué par des panneaux opaques (8, 9) formant la partie basse de la porte, caractérisée en ce que les panneaux opaques (8, 9) sont d'une part fixés latéralement par clippage (24, 24a) sur des profilés (15, 21) fixés sur le cadre (1) et recouvrant respectivement les tranches arrière et avant de la porte jusqu'à environ la moitié de la hauteur de celle-ci, et sont d'autre part solidaires par leur partie supérieure du panneau transparent (3) entourant la vitre (6).

2. Porte selon la revendication 1, caractérisée en ce que le cadre (1), les deux profilés (15, 21) et le panneau opaque extérieur (8) coopèrent avec un joint (25) disposé intérieurement à l'encadrement de la porte pour assurer son étanchéité en même temps que la continuité du panneau transparent (3) avec la carrosserie (26) du véhicule.

3. Porte selon la revendication 2, caractérisée en ce que l'étanchéité vis-à-vis de la partie basse de la carrosserie (26) est assurée par un retour (8a) du panneau extérieur (8) qui écrase le joint (25).

4. Véhicule automobile équipé de portes suivant l'une des revendications 1 à 3.

## Patentansprüche

1. Kraftfahrzeugseitentür, die einen Rahmen (1) aufweist, auf dem eine durchsichtige, eine von einer verschiebbaren Scheibe (6) verschliessbare Öffnung begrenzende Blende (3) befestigt ist, wobei in dieser Öffnung ein Riegel (2) an seinen Enden auf den seitlichen Teilen (1b) des Rahmens befestigt ist, und wobei dieser Riegel auf der inneren Seite der verschiebbaren Scheibe (6) liegt, deren unterer Teil in eine geschlossene, mit den unteren Teil der Tür bildenden opaken Blenden (8, 9) gebildete Aufnahme eintreten kann, dadurch gekennzeichnet, dass die opaken Blenden (8, 9) einerseits auf auf dem Rahmen (1) befestigten und bzw. die vorderen und hinteren Ränder der Tür bis ungefähr die Hälfte ihrer Höhe deckenden Profilen (15, 21) seitlich durch Einklemmen (24, 24a) befestigt sind, und andererseits an ihrem oberen Teil mit der die Scheibe (6) umgebenden durchsichtigen Blende (3) einstückig sind.

2. Tür nach Anspruch 1, dadurch gekennzeichnet, dass der Rahmen (1), beide Profile (15, 21) und die äussere opake Blende (8) mit einer auf der inneren Seite des Türrahmens angebrachten Dichtung (25) zusammenwirken, um die Dichtigkeit der Tür und gleichzeitig die Kontinuität der durchsichtigen Blende (3) mit der Karrosserie (26) des Fahrzeugs zu gewährleisten.

3. Tür nach Anspruch 2, dadurch gekennzeichnet, dass die Dichtigkeit in bezug auf den unteren Teil der Karrosserie (26) durch eine die Dichtung (25) zerquetschenden Biegung (8a) der äusseren Blende (8) gewährleistet ist.

4. Mit Türen nach einem der Ansprüche 1 bis 3 ausgerüstetes Kraftfahrzeug.

## Claims

1. Side door of an automotive vehicle comprising a frame (1) on which is fastened a transparent panel (3) delimiting an opening which can be closed by a sliding glass (6), and in which a crossbar (2) is fastened at its ends on the lateral sides (1b) of the frame, this crossbar being located on the inner side of the sliding glass (6), the lower part of which can penetrate into a closed housing (7) formed of opaque panels (8, 9) forming the lower part of the door, characterized in that the opaque panels (8, 9) are laterally fastened by clipping (24, 24a) on sections (15, 21) fastened on the frame (1) and covering respectively the rear and front edges of the door up to about half of the height thereof, on the one hand, and are solid at their upper part with the transparent panel (3) surrounding the glass (6), on the other hand.

2. Door according to claim 1, characterized in that the frame (1), both sections (15, 21) and the outer opaque panel (8) co-operate with a seal (25) located on the inner side of the frame of the door to ensure simultaneously its tightness and the continuity of the transparent panel (3) with the body (26) of the vehicle.

3. Door according to claim 2, characterized in that the tightness with respect to the lower part of the body (26) is ensured by a turn (8a) of the outer panel (8) which squeezes the seal (25).

4. Automotive vehicle equiped with doors according to one of claims 1 to 3.

Fig. 1

Fig. 5

Fig. 6

Fig. 7

Fig. 8

Fig. 2   Fig. 3   Fig. 4

Fig. 9

Fig. 10

Fig. 11

Fig. 12

Fig. 13

Fig. 14